# EUROPÄISCHE PATENTSCHRIFT

(11) **EP 2 129 466 B1**
(45) Veröffentlichungstag und Bekanntmachung des Hinweises auf die Patenterteilung: **31.12.2014**
(21) Anmeldenummer: 08714227.9
(22) Anmeldetag: 01.02.2008
(51) Int. Cl.: B01L 9/00, C12M 3/00

(54) **MANIPULATIONSEINRICHTUNG UND MANIPULATIONSVERFAHREN FÜR EINE BIOLOGISCHE PROBE**
MANIPULATION DEVICE AND MANIPULATION METHOD FOR A BIOLOGICAL SAMPLE
DISPOSITIF DE MANIPULATION ET PROCÉDÉ DE MANIPULATION POUR ÉCHANTILLON BIOLOGIQUE

(30) Priorität: 26.02.2007 DE 102007009219
(43) Veröffentlichungstag der Anmeldung: 09.12.2009
(73) Patentinhaber: Fraunhofer-Gesellschaft zur Förderung der angewandten Forschung e.V., 80686 München (DE)
(72) Erfinder: FUHR, Günter, 13187 Berlin (DE); SCHMITT, Daniel, 66806 Ensdorf (DE); STREHLOW, Rothin, 14195 Berlin (DE); MEICHE, Jürgen, 66386 St. Ingbert (DE)
(74) Vertreter: Beier, Ralph
(86) Internationale Anmeldenummer: PCT/EP2008/000831
(87) Internationale Veröffentlichungsnummer: WO 2008/104262

(56) Entgegenhaltungen:
- EP-A- 1 270 066
- WO-A-2005/083057

## Beschreibung

Die Erfindung betrifft eine Manipulationseinrichtung und ein entsprechendes Manipulationsverfahren für eine biologische Probe gemäß den nebengeordneten Ansprüchen.

Aus WO 2005/083057 A1 ist eine Manipulationseinrichtung bekannt, die es ermöglicht, einen Probenträger mit einer darauf adhärierten biologischen Probe in einem Kanal eines Mikrosystems zu bewegen. Hierzu weist der Probenträger ein integriertes Magnetelement auf, so dass der Probenträger mit dem integrierten Magnetelement durch ein äußeres Magnetfeld entlang dem Kanal des Mikrosystems bewegt werden kann.

Nachteilig an dieser bekannten Manipulationseinrichtung ist zunächst die Tatsache, dass das in den Probenträger integrierte Magnetelement in der Regel giftige Magnetmaterialien enthält, wie beispielsweise Nickel, aus denen toxische Ionen in die Lösung in dem Kanal austreten können.

Ein weiterer Nachteil der vorstehend beschriebenen bekannten Manipulationseinrichtung ist die Tatsache, dass das in den Probenträger integrierte Magnetelement in der Regel aus einem undurchsichtigen Magnetmaterial besteht, was eine lichtmikroskopische Untersuchung der auf dem Probenträger adhärierten Probe ausschließt oder zumindest erschwert.

Darüber hinaus besteht bei der bekannten Manipulationseinrichtung die Möglichkeit, dass sich benachbarte Probenträger wechselseitig magnetisch beeinflussen, was unerwünscht ist.

Aus der Patentanmeldung WO 2005/083057 A1 ist es weiterhin bekannt, biologische Proben in einem Kanal eines Mikrosystems durch separate Magnetelemente ("Magnet Beads") zu bewegen, die direkt an der Probe angreifen und ebenfalls durch ein äußeres Magnetfeld bewegt werden.

Nachteilig an diesem bekannten Verfahren zur Bewegung einer biologischen Probe in einem Kanal eines Mikrosystems ist die Tatsache, dass die "Magnet Beads" direkt an der Probe angreifen, was störend ist.

Ferner ist zum Stand der Technik noch hinzuweisen auf EP-A-1 270 066.

Der Erfindung liegt deshalb die Aufgabe zugrunde, eine entsprechend verbesserte Manipulationseinrichtung und ein entsprechendes Manipulationsverfahren zu schaffen.

Diese Aufgabe wird durch eine erfindungsgemäße Manipulationseinrichtung und ein entsprechendes Manipulationsverfahren gemäß den nebengeordneten Ansprüchen gelöst.

Die Erfindung umfasst die allgemeine technische Lehre, dass zur Bewegung des Probenträgers dienende Magnetelement nicht - wie bei der Druckschrift WO 2005/083057 A1 - in den Probenträger zu integrieren, sondern als separates Bauteil auszuführen, das baulich von dem Probenträger getrennt ist und lediglich mit dem Probenträger gekoppelt werden kann, um den Probenträger zu bewegen.

Zum einen bietet dies den Vorteil, dass zwischen den einzelnen Probenträgern keine magnetischen Wechselwirkungen auftreten, da die Probenträger selbst vorzugsweise aus einem nicht-magnetischen Material bestehen.

Zum anderen bietet die bauliche Trennung des Probenträgers von dem Magnetelement den Vorteil, dass der Probenträger aus einem lichtdurchlässigen Material bestehen kann, was eine lichtmikroskopische Untersuchung der auf dem durchsichtigen Probenträger adhärierten Probe ermöglicht.

Ein weiterer Vorteil der erfindungsgemäßen Trennung des Magnetelements von dem Probenträger besteht darin, dass das Magnetelement vollständiger und besser umhüllt werden kann als bei einer Integration des Magnetelements in den Probenträger, da keine optisch glatte und von biologischen Zellen besiedelbare Oberfläche vorhanden sein muss. Diese bessere Umhüllung des Magnetelements im Rahmen der erfindungsgemäßen Lösung verhindert den Austritt von Metallionen aus dem Magnetelement in die Lösung in den Kanal des Mikrosystems oder minimiert zumindest den Ionenaustritt für den Zeitraum einer Kultivierung von 1-40 Tagen.

Weiterhin ist zu erwähnen, dass sich die Erfindung von der eingangs erwähnten bekannten Bewegung von biologischen Proben durch sogenannte "Magnet Beads" dadurch unterscheidet, dass das Magnetelement im Rahmen der Erfindung nicht an der Probe selbst angreift, sondern an dem Probenträger, so dass die Probe selbst durch die Kopplung mit dem Magnetelement nicht beeinflusst wird.

Vorzugsweise ist der Probenträger selbst amagnetisch und besteht somit aus einem nicht-magnetischen und nicht-magnetisierbaren Material. Zum einen werden dadurch magnetische Wechselwirkungen zu anderen Probenträgern verhindert, was bei der Handhabung der Probenträger störend wäre. Zum anderen ermöglicht ein nicht-magnetisches Material zur Herstellung des Probenträgers einen durchsichtigen Probenträger, was lichtmikroskopische Untersuchungen der auf dem Probenträger adhärierten Probe erlaubt, wie bereits vorstehend kurz erwähnt wurde. Die Erfindung ist jedoch hinsichtlich des Materials für den Probenträger nicht auf amagnetische Materialien beschränkt, sondern grundsätzlich auch mit anderen Materialien realisierbar.

Darüber hinaus weist die erfindungsgemäße Manipulationseinrichtung vorzugsweise ein Kopplungselement auf, das die mechanische Kopplung des Magnetelements mit dem Probenträger ermöglicht.

Beispielsweise kann dieses Kopplungselement aus zwei Armen bestehen, welche eine dazwischen befindliche Aufnahme für den Probenträger bilden und den Probenträger im gekoppelten Zustand seitlich umgreifen.

Vorzugsweise besteht das Kopplungselement aus einem durchsichtigen Material, so dass das Kopplungselement die lichtmikroskopische Untersuchung der auf dem Probenträger adhärierten Probe im zusammengekoppelten Zustand nicht behindert.

Weiterhin ist zu erwähnen, dass das Kopplungselement vorzugsweise aus einem amagnetischen Material besteht, was jedoch nicht zwingend erforderlich ist.

Darüber hinaus kann das Kopplungselement auch als Distanzstück zwischen dem Magnetelement und dem Probenträger dienen, indem das Kopplungsstück eine vorgegebene Länge aufweist, die im gekoppelten Zustand einen bestimmten Abstand zwischen dem Magnetelement und dem Probenträger sicherstellt. Vorzugsweise ist dieser Abstand größer als die räumliche Ausdehnung des Probenträgers und/oder des Magnetelements. Die beabstandete Kopplung zwischen dem Magnetelement und dem Probenträger erleichtert vorteilhaft lichtmikroskopische Untersuchungen der auf dem Probenträger adhärierten Probe, da das Kopplungselement aus einem durchsichtigen Material bestehen kann.

Weiterhin besteht die Möglichkeit, dass das Kopplungselement auf einer Seite mit dem Magnetelement und auf der gegenüberliegenden Seite mit dem Probenträger eine Passung bildet. Beispielsweise kann das Kopplungselement auf der einen Seite eine Aufnahme aufweisen, in die das Magnetelement eingeführt werden kann, während das Kopplungselement auf der gegenüberliegenden Seite eine Aufnahme aufweist, in die der Probenträger eingeführt werden kann.

Vorzugsweise weist das Magnetelement eine wasserdichte Ummantelung auf, die ein Herauslösen von Ionen aus dem Magnetelement verhindert. Diese Ummantelung ist vorteilhaft, weil das Magnetelement in der Regel aus einem toxischen Material besteht.

Weiterhin besteht im Rahmen der Erfindung die Möglichkeit, dass die Manipulationseinrichtung mehrere Magnetelemente aufweist, die unterschiedlich gepolt sind und sich gegenseitig magnetisch anziehen.

Beispielsweise können zwei Magnetelemente vorgesehen sein, die jeweils im Wesentlichen U-förmig sind und mit ihren unterschiedlich gepolten Grundseiten aneinander anliegen und sich wechselseitig anziehen, so dass die in unterschiedliche Richtungen weisenden Schenkelpaare der beiden Magnetelemente jeweils eine Aufnahme für jeweils einen Probenträger bilden.

Weiterhin besteht im Rahmen der Erfindung die Möglichkeit, dass zwei Magnetelemente vorgesehen sind, die sich wechselseitig magnetisch anziehen und mindestens einen Probenträger zwischen sich einschließen. Auch hierbei können die beiden Magnetelemente beispielsweise U-förmig sein, wobei die Schenkel der beiden U-förmigen Magnetelemente einander zugewandt sind und sich magnetisch anziehen.

Darüber hinaus besteht im Rahmen der Erfindung die Möglichkeit, dass mehrere Probenträger und/oder mehrere Magnetelemente zusammen ein Aggregat in Form eines Schubverbands oder eines Zugverbands bilden. Beispielsweise können zwischen zwei Magnetelementen mehrere Probenträger eingeschlossen sein, wobei sich die Magnetelemente wechselseitig magnetisch anziehen und dadurch den Schubverband bzw. Zugverband zusammenhalten.

Darüber hinaus weist die erfindungsgemäße Manipulationseinrichtung vorzugsweise einen Kanal auf, in dem der Probenträger zusammen mit dem Magnetelement durch ein äußeres Magnetfeld bewegt wird. Der Kanal weist hierbei vorzugsweise Abmessungen im Mikrometerbereich oder im Millimeterbereich auf. Die Breite des Kanals liegt also vorzugsweise im Bereich von 10 µm bis 4 mm, während die Höhe des Kanals vorzugsweise im Bereich von 10 µm bis 1 mm liegt.

Ferner umfasst die erfindungsgemäße Manipulationseinrichtung vorzugsweise auch eine Magneteinheit, welche das äußere Magnetfeld zur Bewegung des Magnetelements erzeugt, wobei die Magneteinheit außerhalb des Kanals angeordnet ist und durch die Kanalwand hindurch auf das Magnetelement wirkt. Hierbei ist es vorteilhaft, wenn das äußere Magnetfeld in Kanallängsrichtung beweglich ist, um das Magnetelement zusammen mit dem Probenträger in Kanallängsrichtung mitzunehmen. Eine Möglichkeit hierzu besteht darin, dass die Magneteinheit selbst in Kanallängsrichtung beweglich ist, so dass auch das von der Magneteinheit erzeugte Magnetfeld in Kanallängsrichtung wandern kann. Eine andere Möglichkeit besteht darin, dass die Magneteinheit selbst ortsfest angeordnet ist, aber ein wanderndes Magnetfeld erzeugt, wie es beispielsweise von Linearmotoren bekannt ist.

Weiterhin besteht im Rahmen der Erfindung die Möglichkeit, dass sowohl das Magnetelement als auch die externe Magneteinheit jeweils mindestens zwei Permanentmagneten aufweist, wobei die Permanentmagneten in dem Magnetelement einerseits und in der Magneteinheit andererseits räumlich komplementär zueinander angeordnet sind. Dies bietet den Vorteil, dass eine besonders gute und definierte Kraftwirkung zwischen der externen Magneteinheit und dem Magnetelement erreicht wird.

Bei der vorstehend beschriebenen Variante mit zwei Magnetelementen besteht die Möglichkeit, dass beide Magnetelemente aus einem permanentmagnetischen Material bestehen. Alternativ besteht jedoch auch die Möglichkeit, dass das eine Magnetelement aus einem permanentmagnetischen Material besteht, während das andere Magnetelement lediglich aus einem magnetisierbaren Material (z.B. Eisen) besteht.

Ferner ist zu erwähnen, dass vorzugsweise sowohl der Probenträger als auch das Magnetelement Abmessungen im Mikrometerbereich oder im Millimeterbereich aufweisen.

Hinsichtlich der Formgebung des Magnetelements bestehen im Rahmen der Erfindung vielfältige Möglichkeiten. Beispielsweise kann das Magnetelement in der Aufsicht U-förmig, V-förmig, H-förmig, X-förmig, Doppel-U-förmig oder ringförmig, insbesondere kreisförmig, sein. Die Erfindung ist jedoch hinsichtlich der Formgebung des Magnetelements nicht auf die vorstehend beschriebenen exemplarischen Formen beschränkt, sondern grundsätzlich auch mit anderen Formen realisierbar.

Weiterhin ist zu erwähnen, dass das Magnetelement wahlweise aus einem permanentmagnetischen, diamagnetischen, ferromagnetischen oder magnetisierbaren Material bestehen kann. Beispielsweise kann das Magnetelement aus Eisen, Nickel oder einer Legierung dieser Materialien bestehen.

Darüber hinaus ist zu erwähnen, dass der Probenträger bei der erfindungsgemäßen Manipulationseinrichtung vorzugsweise im Wesentlichen plattenförmig ist, so dass die biologischen Zellen auf der Oberseite des Probenträgers adhärieren können.

In einer Variante der Erfindung ist an der Außenseite des Probenträgers und/oder des Magnetelements eine reibungsmindernde Beschichtung vorgesehen, die bei einer Bewegung des Probenträgers bzw. des Magnetelements in dem Kanal des Mikrosystems die Reibung zwischen der Kanalwand und dem Probenträger bzw. dem Magnetelement verringert. Vorzugsweise ist diese reibungsmindernde Beschichtung zumindest an der Unterseite des Probenträgers bzw. des Magnetelements angebracht.

Ferner umfasst die Erfindung auch ein entsprechendes Manipulationsverfahren, wie sich bereits aus der vorstehenden Beschreibung der erfindungsgemäßen Manipulationseinrichtung ergibt.

Hierbei ist ergänzend zu erwähnen, dass der Probenträger mit dem zusammengekoppelten Magnetelement in dem Kanal des Mikrosystems auch entgegen einer Flüssigkeitsströmung in dem Kanal oder gegen die Oberflächenspannung einer Ausgangsöffnung des Mikrosystems bewegt werden kann.

Die Bewegungsgeschwindigkeit des Probenträgers mit dem zusammengekoppelten Magnetelement kann hierbei im Bereich von mm/s bis cm/s oder im Bereich von µm/h liegen. Die Positionierungspräzision kann hierbei im Mikrometerbereich oder sogar im Nanometerbereich liegen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine erfindungsgemäße Manipulationseinrichtung mit einem Probenträger und einem baulich getrennten Magnetelement im entkoppelten Zustand,
- Figur 1B: die Manipulationseinrichtung gemäß Fig. 1A im zusammengekoppelten Zustand,
- Figur 1C: eine Querschnittsansicht durch das Magnetelement aus den Figuren 1A und 1B,
- Figur 2: eine Perspektivansicht eines anderen Ausführungsbeispiels einer erfindungsgemäßen Manipulationseinrichtung zum Einsatz in einem Mikrosystem,
- Fig. 3A-3N: verschiedene Formgebungen für das Magnetelement,
- Fig. 4A-4D: verschiedene Ausführungsformen des Magnetelements mit einem Kopplungselement zum Zusammenkoppeln mit dem Propenträger,
- Figur 5A: zwei zusammengekoppelte Magnetelemente zur Aufnahme von jeweils einem Probenträger,
- Figur 5B: ein einzelnes U-förmiges Magnetelement zur Aufnahme von zwei Probenträgern,
- Figur 5C: das Magnetelement gemäß Figur 5B mit zwei zusammengekoppelten Probenträgern,
- Figur 6A: eine erfindungsgemäße Manipulationseinrichtung mit einem Magnetelement, einem Probenträger und einem Kopplungselement im entkoppelten Zustand,
- Figur 6B: die Manipulationseinrichtung gemäß Figur 6A im zusammengekoppelten Zustand,
- Figur 7: eine Abwandlung des Ausführungsbeispiels gemäß Figur 2 mit komplementär angeordneten Permanentmagneten in dem Magnetelement einerseits und in einer externen Magneteinheit andererseits,
- Figur 8: eine erfindungsgemäße Manipulationseinrichtung mit zwei Magnetelementen, die einen Probenträger einschließen, wobei das eine Magnetelement permanentmagnetisch ist, während das andere Magnetelement lediglich magnetisierbar ist,
- Figur 9: eine Abwandlung des Ausführungsbeispiels gemäß Figur 8, wobei die beiden Magnetelemente permanentmagnetisch sind sowie
- Figur 10: eine erfindungsgemäße Manipulationseinrichtung mit einem Aggregat aus mehreren Magnetelementen und mehreren Probenträgern.

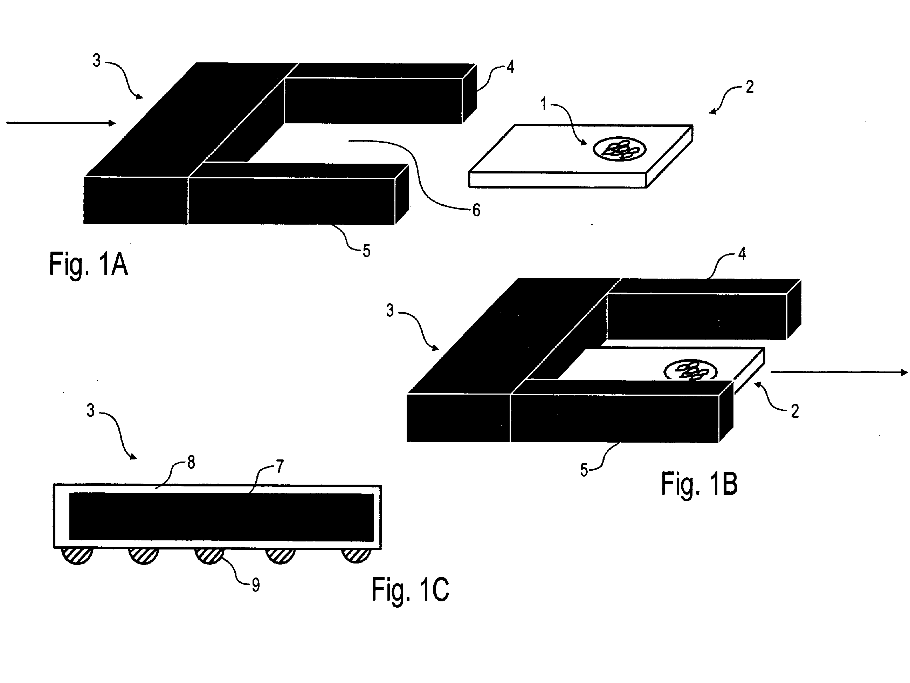

Die Figuren 1A bis 1C zeigen ein Ausführungsbeispiel einer erfindungsgemäßen Manipulationseinrichtung, die eingesetzt werden kann, um eine biologische Probe 1 im adhärierten Zustand in einem Kanal eines Mikrosystems zu bewegen, wobei das Mikrosystem und der Kanal in diesen Zeichnungen zur Vereinfachung nicht dargestellt sind.

Zur Aufnahme der Probe 1 weist die Manipulationseinrichtung einen im Wesentlichen plattenförmigen Probenträger 2 auf, an dessen Oberseite die biologische Probe 1 adhäriert ist, was eine Untersuchung der Probe 1 im adhärierten Zustand ermöglicht. Die Untersuchung der Probe 1 kann beispielsweise lichtmikroskopisch erfolgen, was an sich aus dem Stand der Technik bekannt ist. Der Probenträger 2 besteht hierbei aus einem nicht-magnetischen durchsichtigen Material, wie beispielsweise Glas oder Kunststoff. Die Herstellung des Probenträgers 2 aus einem nicht-magnetischen Material bietet den Vorteil, dass der Probenträger 2 keine magnetischen Wechselwirkungen mit benachbarten Probenträgern zeigt. Die Herstellung des Probenträgers 2 aus einem durchsichtigen Material bietet dagegen den Vorteil, dass lichtmikroskopische Transmissionsmessungen an der Probe 1 ohne weiteres möglich sind.

Weiterhin weist die Manipulationseinrichtung ein Magnetelement 3 auf, das aus einem permanentmagnetischen Werkstoff besteht, so dass das Magnetelement 3 in dem Kanal des Mikrosystems durch ein externes Magnetfeld bewegt werden kann, wie noch eingehend beschrieben wird.

Das Magnetelement 3 ist hierbei in der Aufsicht U-förmig und weist zwei Schenkel 4, 5 auf, die eine Aufnahme 6 für den Probenträger 2 einschließen. Zur Bewegung des Probenträgers 2 mit der darauf adhärierten Probe 1 in dem Kanal des Mikrosystems wird das Magnetelement 3 mit dem Probenträger 2 gekoppelt, wie in Figur 1B dargestellt ist. Der Probenträger 2 liegt dann zwischen den beiden Schenkeln 4, 5 an der Basis des U-förmigen Magnetelements 3 an, so dass das Magnetelement 3 den Probenträger 2 bei einer Bewegung in Pfeilrichtung mitnimmt.

Hierbei ist zu erwähnen, dass das Magnetelement 3 einen Magnetkern 7 aus einem permanentmagnetischen Material und eine Ummantelung 8 aufweist, wobei die Ummantelung 8 wasserdicht ist, um zu verhindern, dass toxische Ionen aus dem Magnetkern 7 in die Lösung in dem Kanal des Mikrosystems gelangen und dort toxisch wirken.

Weiterhin weist das Magnetelement 3 an seiner Unterseite eine reibungsmindernde Beschichtung 9 auf, welche die Reibung zwischen dem Magnetelement 3 und den Kanalwänden verringert.

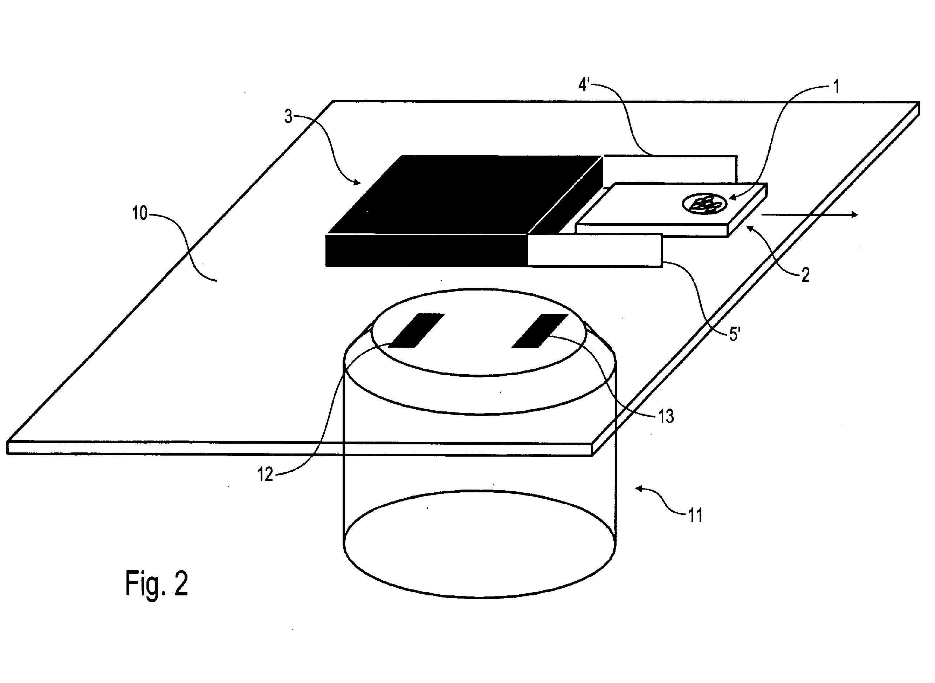

Das Ausführungsbeispiel gemäß Figur 2 stimmt weitgehend mit dem vorstehend beschriebenen Ausführungsbeispiel überein, so dass zur Vermeidung von Wiederholungen auf die vorstehende Beschreibung verwiesen wird, wobei für entsprechende Einzelheiten im Folgenden dieselben Bezugszeichen verwendet werden.

Eine Besonderheit dieser Darstellung besteht darin, dass zusätzlich eine Kanalwand 10 des Kanals in dem Mikrosystem dargestellt ist.

Weiterhin ist außerhalb des Kanals eine Magneteinheit 11 dargestellt, die mittels zweier Permanentmagneten 12, 13 ein Magnetfeld in dem Kanal erzeugt, welches das Magnetelement 3 mit dem zusammengekoppelten Probenträger 2 in Kanallängsrichtung bewegen kann.

Eine Besonderheit dieses Ausführungsbeispiels besteht darin, dass das Magnetelement 3 anstelle der aus einem permanentmagnetischen Material bestehenden Schenkel 4, 5 zwei Schenkel 4', 5' aus einem nicht-magnetischen und durchsichtigen Material aufweist. Die Fertigung der Schenkel 4', 5' aus einem durchsichtigen Material erleichtert lichtmikroskopische Untersuchungen der adhärierten Probe 1, wenn das Magnetelement 3 mit dem Probenträger 2 zusammengekoppelt ist.

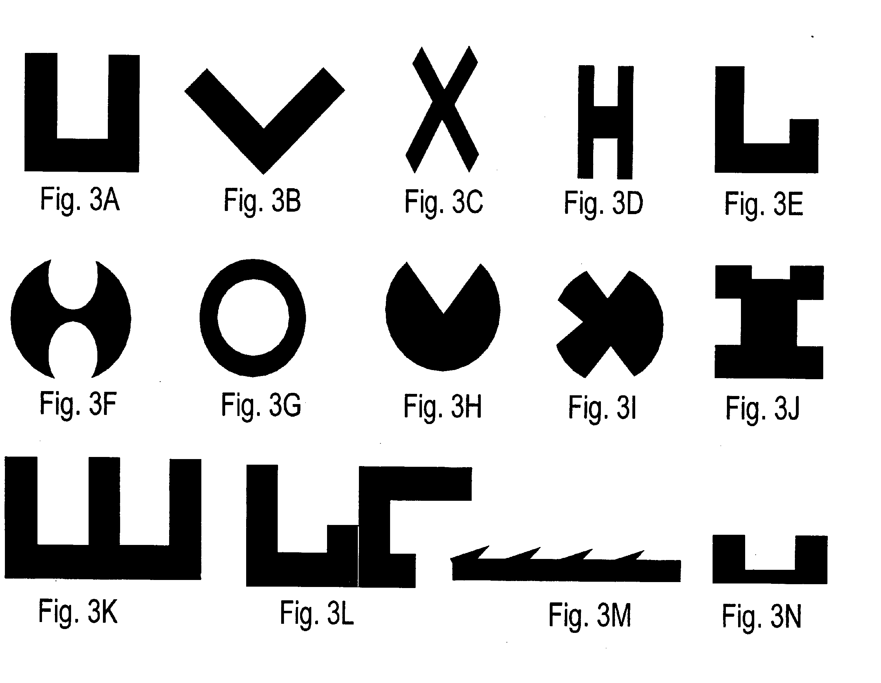

Die Figuren 3A bis 3N zeigen verschiedene mögliche Formgebungen für das Magnetelement 3 bei der erfindungsgemäßen Manipulationseinrichtung. So kann das Magnetelement beispielsweise U-förmig (Fig. 3A), V-förmig (Fig. 3B), X-förmig (Fig. 3C), H-förmig (Fig. 3D) oder L-förmig (Fig. 3E) sein. Weiterhin kann das Magnetelement kreisringförmig (Fig. 3G) oder Doppel-U-förmig (Fig. 3K) sein.

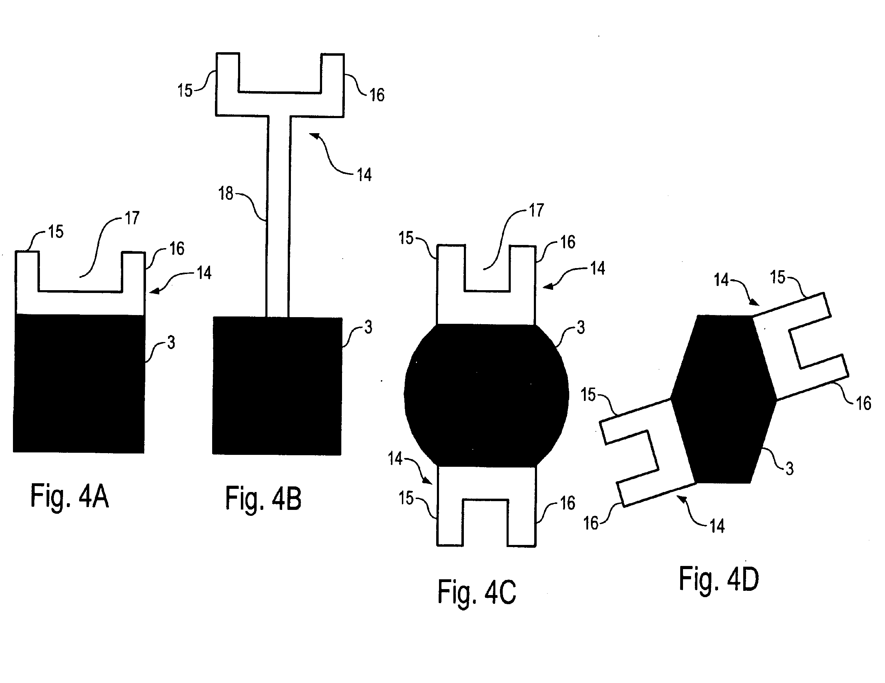

Die Figuren 4A bis 4D zeigen verschiedene Ausführungsbeispiele für das Magnetelement 3 mit einem zusätzlichen Kopplungselement 14 zur Kopplung des Magnetelements 3 mit dem Probenträger 2, der hier zur Vereinfachung nicht dargestellt ist.

Gemeinsam ist diesen Ausführungsbeispielen, dass das Kopplungselement 14 zwei Schenkel 15, 16 aufweist, die eine Aufnahme 17 für den Probenträger 2 einschließen.

Bei dem Ausführungsbeispiel gemäß Figur 4B weist das Kopplungselement 14 zusätzlich ein Distanzstück 18 auf, um im zusammengekoppelten Zustand einen bestimmten Mindestabstand zwischen dem Magnetelement 3 und dem Probenträger 2 bzw. der darauf adhärierten Probe 1 herzustellen.

Bei den Ausführungsbeispielen gemäß Figur 4C und 4D sind an dem Magnetelement 3 auf gegenüberliegenden Seiten zwei Kopplungselemente 14 angebracht, was die Aufnahme von zwei Probenträgern 2 ermöglicht.

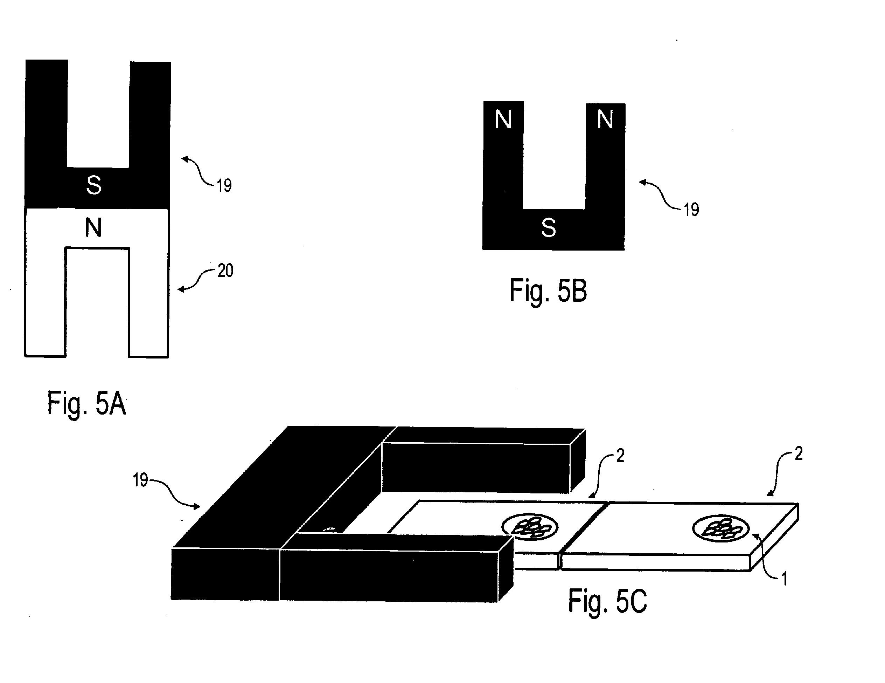

Das Ausführungsbeispiel gemäß Figur 5A zeigt zwei U-förmige Magnetelemente 19, 20, die gegensätzlich gepolt sind und jeweils mit ihrer Basis aneinander anliegen und sich wechselseitig magnetisch anziehen. Die beiden U-förmigen Magnetelemente 19, 20 bilden also jeweils eine Aufnahme für einen Probenträger 2.

Figur 5B zeigt das Magnetelement 19 gemäß Figur 5A im vereinzelten Zustand.

Figur 5C zeigt das Magnetelement 19 gemäß Figur 5B mit zwei darin aufgenommenen Probenträgern 2, wobei das Magnetelement 19 mit den beiden Probenträgern 2 einen Schubverband bildet, der von einem äußeren Magnetfeld in Kanallängsrichtung durch einen Kanal eines mikrofluidischen Systems geschoben werden kann.

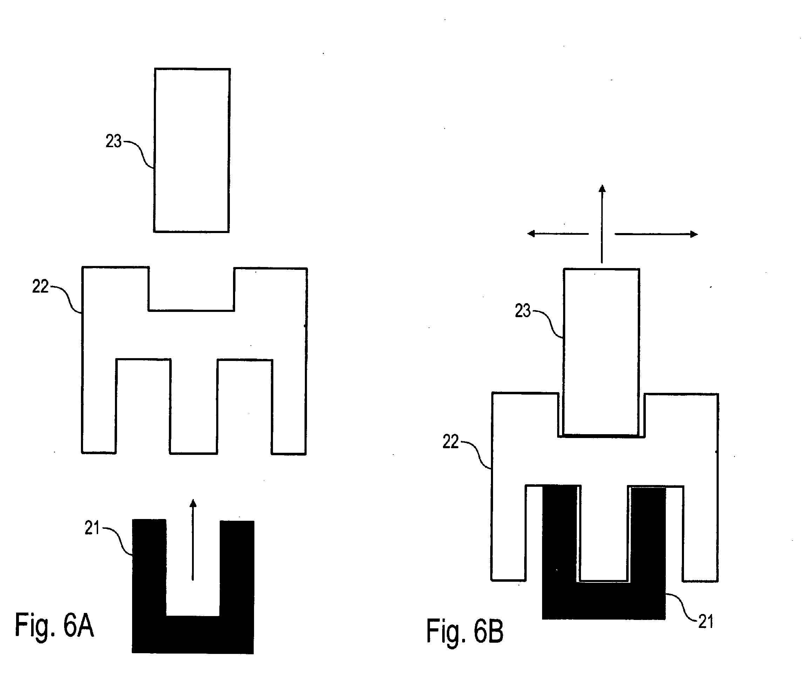

Die Figuren 6A und 6B zeigen ebenfalls ein Aggregat zur Bewegung durch einen Kanal eines mikrofluidischen Systems, wobei das Aggregat in Figur 6A im entkoppelten Zustand und in Figur 6B im zusammengekoppelten Zustand dargestellt ist und aus einem Magnetelement 21, einem Kopplungselement 22 und einem Probenträger 23 besteht.

Das Magnetelement 21 ist hierbei wiederrum U-förmig und bildet mit seinen beiden Schenkeln eine Aufnahme für einen entsprechend angepassten Schenkel des Kopplungselements 2.

Auf der gegenüberliegenden Seite weist das Kopplungselement 22 ebenfalls eine Aufnahme auf, die zur Aufnahme des Probenträgers 23 dient, wie aus der Darstellung des zusammengekoppelten Zustands in Figur 6B ersichtlich ist.

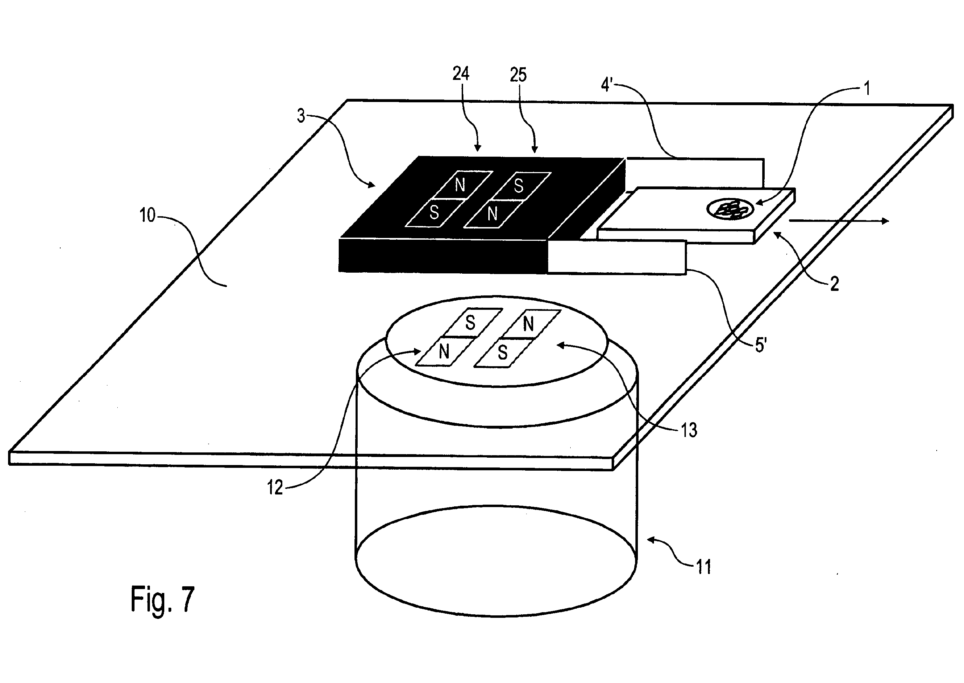

Das Ausführungsbeispiel gemäß Figur 7 stimmt weitgehend mit dem Ausführungsbeispiel gemäß Figur 2 überein, so dass zur Vermeidung von Wiederholungen auf die vorstehende Beschreibung verwiesen wird, wobei im Folgenden für entsprechende Einzelheiten dieselben Bezugszeichen verwendet werden.

Eine Besonderheit dieses Ausführungsbeispiels besteht zunächst darin, dass die externe Magneteinheit 11 zwei Permanentmagneten 12, 13 aufweist, die gegensätzlich gepolt sind.

Das Magnetelement 3 weist ebenfalls zwei Permanentmagneten 24, 25 auf, wobei die Permanentmagneten 12, 13 einerseits und die Permanentmagneten 24, 25 andererseits komplementär gepolt und angeordnet sind, was eine besonders gute und definierte Kraftwirkung zwischen dem Magnetelement 3 und der Magneteinheit 11 bewirkt.

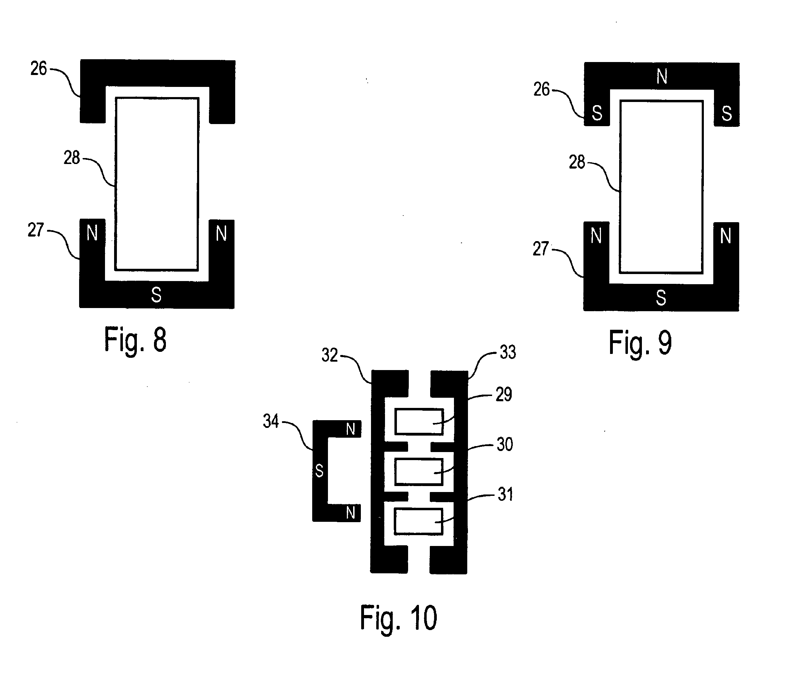

Die Figuren 8 und 9 zeigen ein Aggregat mit zwei U-förmigen Magnetelementen 26, 27, die sich wechselseitig magnetisch anziehen und zwischen sich einen Probenträger 28 einschließen.

Bei dem Ausführungsbeispiel gemäß Figur 8 besteht das Magnetelement 26 aus einem magnetisierbaren Material, während das Magnetelement 27 aus einem permanentmagnetischen Material besteht.

Bei dem Ausführungsbeispiel gemäß Figur 9 bestehen dagegen die beiden Magnetelemente 26, 27 aus einem permanentmagnetischen Material und sind gegensätzlich gepolt, so dass sich die beiden Magnetelemente 26, 27 wechselseitig magnetisch anziehen.

Figur 10 zeigt schließlich ein Aggregat mit drei Probenträgern 29, 30 und 31, die im zusammengekoppelten Zustand zwischen zwei Magnetelementen 32, 33 eingeschlossen sind, wobei die beiden Magnetelemente 32, 33 aus einem magnetisierbaren Material bestehen und sich im zusammengekoppelten Zustand wechselseitig magnetisch anziehen. Darüber hinaus weist das Aggregat in diesem Ausführungsbeispiel ein Magnetelement 34 aus einem permanentmagnetischen Material auf.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Probe
- 2: Probenträger
- 3: Magnetelement
- 4: Schenkel
- 5: Schenkel
- 6: Aufnahme
- 7: Magnetkern
- 8: Ummantelung
- 9: Reibungsmindernde Beschichtung
- 10: Kanalwand
- 11: Magneteinheit
- 12: Permanentmagnet
- 13: Permanentmagnet
- 14: Kopplungselement
- 15: Schenkel
- 16: Schenkel
- 17: Aufnahme
- 18: Distanzstück
- 19: Magnetelement
- 20: Magnetelement
- 21: Magnetelement
- 22: Kopplungselement
- 23: Probenträger
- 24: Permanentmagnet
- 25: Permanentmagnet
- 26: Magnetelement
- 27: Magnetelement
- 28: Probenträger
- 29: Probenträger
- 30: Probenträger
- 31: Probenträger
- 32: Magnetelement
- 33: Magnetelement

## Patentansprüche

1. Manipulationseinrichtung für eine Probe (1), insbesondere für eine biologische Probe, mit
a) einem Probenträger (2; 23; 29-31) zur Aufnahme der Probe (1), und
b) einem Magnetelement (3; 20, 21; 26, 27; 32, 33), das zusammen mit dem Probenträger (2; 23; 29-31) mittels eines äußeren Magnetfeldes bewegbar ist,
**dadurch gekennzeichnet, dass**
c) das Magnetelement (3; 20, 21; 26, 27; 32, 33) von dem Probenträger (2; 23; 29-31) baulich getrennt ist, und
d) das Magnetelement (3; 20, 21; 26, 27; 32, 33) mit dem Probenträger (2; 23; 29-31) mechanisch koppelbar ist.

2. Manipulationseinrichtung nach Anspruch 1, **dadurch gekennzeichnet, dass** der Probenträger (2; 23; 29-31) nichtmagnetisch ist.

3. Manipulationseinrichtung nach einem der vorhergehenden Ansprüche, **gekennzeichnet durch** ein Kopplungselement (4, 4; 4', 5'; 14; 22), das die mechanische Kopplung des Magnetelements (3; 20, 21; 26, 27; 32, 33) mit dem Probenträger (2; 23; 29-31) ermöglicht.

4. Manipulationseinrichtung nach Anspruch 3, **dadurch gekennzeichnet,**
a) **dass** das Kopplungselement (4, 4; 4', 5'; 14; 22) den Probenträger (2; 23; 29-31) im gekoppelten Zustand umgreift, und/oder
b) **dass** das Kopplungselement (4, 4; 4', 5'; 14; 22) durchsichtig ist, und/oder
c) **dass** das Kopplungselement (4, 4; 4', 5'; 14; 22) nichtmagnetisch ist, und/oder
d) **dass** das Kopplungselement (4, 4; 4', 5'; 14; 22) das Magnetelement (3; 20, 21; 6, 27; 32, 33) in einem vorgegebenen Abstand mit dem Probenträger (2; 23; 29-31) koppelt, wobei der Abstand zwischen dem Probenträger (2; 23; 29-31) und dem Magnetelement (3; 20, 21; 26, 27; 32, 33) größer ist als der Probenträger (2; 23; 29-31) und/oder das Magnetelement (3; 20, 21; 26, 27; 32, 33), und/oder
e) **dass** das Kopplungselement (14; 22) auf einer Seite mit dem Magnetelement (3; 20, 21; 26, 27; 32, 33) und auf der gegenüber liegenden Seite mit dem Probenträger (2; 23; 29-31) eine Passung bildet, und/oder
f) **dass** das Magnetelement (3; 20, 21; 26, 27; 32, 33) eine wasserdichte Ummantelung (8) ist, die ein Herauslösen von Ionen aus dem Magnetelement (3; 20, 21; 26, 27; 32, 33) verhindert.

5. Manipulationseinrichtung nach einem der vorhergehenden Ansprüche, **gekennzeichnet durch** mehrere Magnetelemente (19, 20; 26, 27; 32-34) die unterschiedlich gepolt sind und sich gegenseitig magnetisch anziehen.

6. Manipulationseinrichtung nach Anspruch 5, **dadurch gekennzeichnet, dass** die beiden Magnetelemente (19, 20) jeweils im Wesentlichen U-förmig sind und mit ihren unterschiedlich gepolten Grundseiten aneinander anliegen und sich wechselseitig anziehen, so dass die vier Schenkel der Magnetelemente (19, 20) zwei Aufnahme für jeweils eine Probenträger bilden.

7. Manipulationseinrichtung nach einem der vorhergehenden Ansprüche, **gekennzeichnet durch** mindestens zwei Magnetelement (3; 20, 21; 26, 27; 32, 33), die sich magnetisch anziehen und mindestens einen Probenträger (2; 23; 29-31) zwischen sich einschließen.

8. Manipulationseinrichtung nach Anspruch 7,
**dadurch gekennzeichnet, dass** entweder
a) das eine Magnetelement (27) ein permanentmagnetisches Material enthält, während das andere Magnetelement (26) ein magnetisierbares Material enthält, oder
b) beide Magnetelemente (26, 27) ein permanentmagnetisches Material enthalten.

9. Manipulationseinrichtung nach einem der vorhergehenden Ansprüche, **dadurch gekennzeichnet, dass** mehrere Probenträger (2; 23; 29-31) und/oder mehrere Magnetelemente (32-34) zusammen einen Schubverband oder einen Zugverband bilden.

10. Manipulationseinrichtung nach einem der vorhergehenden Ansprüche, **gekennzeichnet durch** einen Kanal, in dem der Probenträger (2; 23; 29-31) mit dem Magnetelement (3; 20, 21; 26, 27; 32, 33) angeordnet ist, wobei der Probenträger (2; 23; 29-31) **durch** ein äußeres Magnetfeld in dem Kanal beweglich ist.

11. Manipulationseinrichtung nach Anspruch 10,
**dadurch gekennzeichnet,**
a) **dass** der Kanal eine Breite von mehr als 10µm und/oder weniger als 5mm, und/oder
b) **dass** der Kanal eine Höhe von mehr als 10µm und/oder weniger als 1mm aufweist.

12. Manipulationseinrichtung nach einem der Ansprüche 10 bis 11, **gekennzeichnet durch** eine Magneteinheit (11) zur Erzeugung des äußeren Magnetfeldes zur Bewegung des Magnetelements (3; 20, 21; 26, 27; 32, 33), wobei die Magneteinheit (11) außerhalb des Kanals angeordnet ist.

13. Manipulationseinrichtung nach Anspruch 12,
**dadurch gekennzeichnet,**
a) **dass** das Magnetelement (3) mindestens zwei Permanentmagneten (24, 25) aufweist,
b) **dass** die Magneteinheit (11) mindestens zwei Permanentmagneten (12, 13) aufweist, und
c) **dass** die Permanentmagneten (24, 25) in dem Magnetelement (3) einerseits und die Permanentmagneten (12, 13) in der Magneteinheit (11) andererseits räumlich komplementär zueinander angeordnet sind.

14. Manipulationseinrichtung nach einem der vorhergehenden Ansprüche, **dadurch gekennzeichnet, dass** der Kanal und/oder der Probenträger (2; 23; 29-31) und/oder das Magnetelement (3; 20, 21; 26, 27; 32, 33) Abmessungen im Mikrometerbereich aufweisen.

15. Manipulationseinrichtung nach einem der vorhergehenden Ansprüche, **dadurch gekennzeichnet, dass** das Magnetelement (3; 20, 21; 26, 27; 32, 33) eine der folgenden Formen aufweist:
a) U-Form,
b) V-Form,
c) H-Form,
d) X-Form,
e) Ringform, insbesondere Kreisform,
f) Doppel-U-Form.

16. Manipulationseinrichtung nach einem der vorhergehenden Ansprüche, **dadurch gekennzeichnet,**
a) **dass** das Magnetelement (3; 20, 21; 26, 27; 32, 33) aus einem permanentmagnetischen Material oder aus einem magnetisierbaren Material besteht, und/oder
b) **dass** das magnetisierbare Material des Magnetelements (3; 20, 21; 26, 27; 32, 33) eines der folgenden Materialien ist: Eisen, Nickel, eine Legierung mit Eisen und/oder Nickel als Legierungsbestandteilen.

17. Manipulationseinrichtung nach einem der vorhergehenden Ansprüche, **dadurch gekennzeichnet,**
a) **dass** der Probenträger (2; 23; 29-31) im Wesentlichen plattenförmig ist, und/oder
b) **dass** der Probenträger (2; 23; 29-31) und/oder das Magnetelement (3; 20, 21; 26, 27; 32, 33)an seiner Außenseite, insbesondere an seiner Unterseite, eine reibungsmindernde Beschichtung aufweist.

18. Manipulationsverfahren für eine Probe (1), insbesondere für eine biologische Probe (1), mit den folgenden Schritten:
a) Ablage der Probe (1) auf einem Probenträger (2; 23; 29-31),
b) Mechanische Kopplung des Probenträgers (2; 23; 29-31) mit einem Magnetelement (3; 20, 21; 26, 27; 32, 33),
c) Erzeugung eines äußeren Magnetfelds zur Bewegung des Magnetelements (3; 20, 21; 26, 27; 32, 33) zusammen mit dem angekoppelten Probenträger (2; 23; 29-31) und der darauf befindlichen Probe (1).

19. Manipulationsverfahren nach Anspruch 18, **gekennzeichnet durch** folgende Schritte:
a) Einführen des Probenträgers (2; 23; 29-31) und des Magnetelements (3; 20, 21; 26, 27; 32, 33) in einen Kanal,
b) Bewegen des Magnetelements (3; 20, 21; 26, 27; 32, 33) mit dem angekoppelten Probenträger (2; 23; 29-31) und der darauf befindlichen Probe (1) in dem Kanal, und/oder
c) Zusammenkoppeln mehrerer Probenträger (2; 23; 29-31) und/oder mehrerer Magnetelemente zu einem Schubverband oder einem Zugverband, und/oder
d) Einschließen mindestens eines Probenträgers (2; 23; 29-31) zwischen zwei Magnetelementen, wobei sich die beiden Magnetelemente gegenseitig magnetisch anziehen, und/oder
e) Untersuchung der auf dem Probenträger (2; 23; 29-31) befindlichen Probe (1), und/oder
f) Erzeugung einer Flüssigkeitsströmung in dem Kanal sowie Bewegen des Magnetelements (3; 20, 21; 26, 27; 32, 33) mit dem Probenträger (2; 23; 29-31) und der auf dem Probenträger (2; 23; 29-31) befindlichen Probe (1) in dem Kanal entgegen der Flüssigkeitsströmung.

20. Manipulationsverfahren nach einem der Ansprüche 18 bis 19, **dadurch gekennzeichnet, dass** das Magnetelement (3; 20, 21; 26, 27; 32, 33) mit dem Probenträger (2; 23; 29-31) und der auf dem Probenträger (2; 23; 29-31) befindlichen Probe (1) mit einer Geschwindigkeit bewegt wird, die größer als 1µm/s und/oder kleiner als 5cm/s ist.

## Claims

1. Manipulation device for a sample (1), particularly for a biological sample, with
a) a sample carrier (2; 23; 29-31) for receiving the sample (1), and
b) a magnetic element (3; 20, 21; 26, 27; 32, 33), which is movable by an external magnetic field along with the sample carrier (2; 23; 29-31),
**characterized in that**
c) the magnetic element (3; 20, 21; 26, 27; 32, 33) is structurally separated from the sample carrier (2; 23; 29-31), and
d) the magnetic element (3; 20, 21; 26, 27; 32, 33) can be mechanically coupled with the sample carrier (2; 23; 29-31).

2. Manipulation device according to claim 1, **characterized in that** the sample carrier (2; 23; 29-31) is non-magnetic.

3. Manipulation device according to one the preceding claims, **characterized by** a coupling element (4, 4; 4', 5'; 14; 22), which allows a coupling of the magnetic element (3; 20, 21; 26, 27; 32, 33) with the sample carrier (2; 23; 29-31).

4. Manipulation device according to claim 3, **characterized in that**
a) the coupling element encompasses the sample carrier (2; 23; 29-31) in a coupled state, and/or
b) the coupling element (4, 4; 4', 5'; 14; 22) is transparent, and/or
c) the coupling element (4, 4; 4', 5'; 14; 22) is a non-magnetic, and/or
d) the coupling element (4, 4; 4', 5'; 14; 22) couples the magnetic element (3; 20, 21; 6, 27; 32, 33) in a predetermined distance from the sample carrier (2; 23; 29-31), wherein the distance between the sample carrier (2; 23; 29-31) and the magnetic element (3; 20, 21; 26, 27; 32, 33) is bigger than the sample carrier (2; 23; 29-31) and/or the magnetic element (3; 20, 21; 26, 27; 32, 33), and/or
e) the coupling element (14; 22) forms a fit on one side with the magnetic element (3; 20, 21; 26, 27; 32, 33) and on the opposite side with the sample carrier (2; 23; 29-31), and/or
f) the magnetic element (3; 20, 21; 26, 27; 32, 33) is a water-tight encapsulation (8), which avoids a dissolution of ions from the magnetic element (3; 20, 21; 26, 27; 32, 33).

5. Manipulation device according to one of the preceding claims, **characterized by** several magnetic elements (19, 20; 26, 27; 32-34), which are poled differently and which attract each other magnetically.

6. Manipulation device according to claim 5, **characterized in that** both magnetic elements (19, 20) each are essentially u-shaped and lie against each other with their differently poled base sides and attract each other mutually, so that the four arms of the magnetic elements (19, 20) form two receptacles for one sample carrier each.

7. Manipulation device according to one of the preceding claims, **characterized by** at least two magnetic elements (3; 20, 21; 26, 27; 32, 33), which attract each other magnetically and which include a sample carrier (2; 23; 29-31) between them.

8. Manipulation device according to claim 7, **characterized in that** either
a) the one magnetic element (27) includes permanent magnetic material, while the other magnetic element (26) includes a magnetisable material, or
b) both magnetic elements (26, 27) include a permanent magnetic material.

9. Manipulation device according to one of the preceding claims, **characterized in that** several sample carriers (2; 23; 29-31) and/or several magnetic elements (32-34) together form a pushing unit or a pulling unit.

10. Manipulation device according to one of the preceding claims, **characterized by** a channel, in which the sample carrier (2; 23; 29-31) is arranged with the magnetic element (3; 20, 21; 26, 27; 32, 33), wherein the sample carrier (2; 23; 29-31) can be moved within the channel by an external magnetic field.

11. Manipulation device according to claim 10, **characterized in that**
a) the channel has a width of more than 10µm and/or less than 5 mm, and/or
b) the channel has a height of more than 10µm and/or less than 1 mm.

12. Manipulation device according to one of claims 10 to 11, **characterized by** a magnetic unit (11) for generating the external magnetic field for movement of the magnetic elements (3; 20, 21; 26, 27; 32, 33), wherein the magnetic unit (11) is arranged outside the channel.

13. Manipulation device according to claim 12, **characterized in that**
a) the magnetic element (3) comprises at least two permanent magnets (24, 25),
b) the magnetic unit (11) comprises at least two permanent magnets (12, 13), and
c) the permanent magnets (24, 25) in the magnetic element (3) on the one hand and the permanent magnets (12, 13) in the magnetic unit (11) on the other hand are spatially complimentary relative to each other.

14. Manipulation device according to one of the preceding claims, **characterized in that** the channel and/or the sample carrier (12; 23; 29-31) and/or the magnetic element (3; 20, 21; 26, 27; 32, 33) comprises dimensions in the micrometre range.

15. Manipulation device according to one of the preceding claims, **characterized in that** the magnetic element (3; 20, 21; 26, 27; 32, 33) comprises one of the following shapes:
a) U-shape,
b) V-shape,
c) H-shape,
d) X-shape,
e) ring-shape, particularly circular shape,
f) double-U-shape.

16. Manipulation device according to one of the preceding claims, **characterized in that**
a) the magnetic element (3; 20, 21; 26, 27; 32, 33) consists of a permanent magnetic material or of a magnetisable material, and/or
b) the magnetisable material of the magnetic element (3; 20, 21; 26, 27; 32, 33) is one of the following materials: iron, nickel, an alloy with iron and/or nickel as alloy components.

17. Manipulation device according to one of the preceding claims, **characterized in that**
a) the sample carrier (2; 23; 29-31) is essentially plate-shaped, and/or
b) the sample carrier (2; 23; 29-31) and/or the magnetic element (3; 20, 21; 26, 27; 32, 33) comprises a friction reducing coating on its outer side, particularly on its bottom side.

18. Manipulation method for a sample (1), particularly for a biological sample (1), comprising the following steps:
a) depositing a sample (1) on a sample carrier (2; 23; 29-31),
b) mechanically coupling the sample carrier (2; 23; 29-31) with the magnetic element (3; 20, 21; 26, 27; 32, 33),
c) generating an external magnetic field for moving the magnetic element (3; 20, 21; 26, 27; 32, 33) along with the coupled sample carrier (2; 23; 29-31) and the sample (1) thereon.

19. Manipulation method according to claim 18, **characterized by** the followings steps:
a) introducing the sample carrier (2; 23; 29-31) and the magnetic element (3; 20, 21; 26, 27; 32, 33) in a channel,
b) moving the magnetic element (3; 20, 21; 26, 27; 32, 33) with the coupled sample carrier (2; 23; 29-31) and the sample (1) thereon within the channel, and/or
c) coupling several sample carriers (2; 23, 29-31) and/or several magnetic elements to form a push unit or pull unit, and/or
d) embedding at least one sample carrier (2; 23; 29-31) between two magnetic elements, wherein both magnetic elements attracted each other mutually, and/or
e) inspection of the sample (1) on the sample carrier (2; 23; 29-31), and/or
f) generating a liquid flow within the channel and moving the magnetic elements (3; 20, 21; 26, 27; 32, 33) with the sample carrier (2; 23; 29-31) and the sample (1) on the sample carrier (2; 23; 29-31) within the channel against the liquid flow.

20. Manipulation method according to one of claims 18 to 19, **characterized in that** the magnetic element (3; 20, 21; 26, 27; 32, 33) with the sample carrier (2; 23; 29-31) and the sample (1) on the sample carrier (2; 23; 29-31) is moved with a speed which is bigger than 1µ/s and/or smaller than 5cm/s.

## Revendications

1. Dispositif de manipulation d'un échantillon (1), en particulier d'un échantillon biologique, comportant
a) un support d'échantillon (2 ; 23 ; 29 à 31) pour recevoir l'échantillon (1), et
b) un élément aimanté (3 ; 20, 21 ; 26, 27 ; 32, 33) qui peut être déplacé conjointement avec le support d'échantillon (2 ; 23 ; 29 à 31) au moyen d'un champ magnétique externe,
**caractérisé en ce que**
c) l'élément aimanté (3 ; 20, 21 ; 26, 27 ; 32, 33) est séparé, au niveau de la construction, du support d'échantillon (2 ; 23 ; 29 à 31), et
d) l'élément aimanté (3 ; 20, 21 ; 26, 27 ; 32, 33) peut être couplé mécaniquement au support d'échantillon (2 ; 23 ; 29 à 31).

2. Dispositif de manipulation selon la revendication 1, **caractérisé en ce que** le support d'échantillon (2 ; 23 ; 29 à 31) n'est pas magnétique.

3. Dispositif de manipulation selon l'une des revendications précédentes, **caractérisé par** un élément de couplage (4, 4 ; 4', 5', 14 ; 22) qui permet le couplage mécanique de l'élément aimanté (3 ; 20, 21 ; 26, 27 ; 32, 33) avec le support d'échantillon (2 ; 23 ; 29 à 31).

4. Dispositif de manipulation selon la revendication 3, **caractérisé en ce que**
a) l'élément de couplage (4, 4 ; 4', 5', 14 ; 22) entoure le support d'échantillon (2 ; 23 ; 29 à 31) à l'état couplé, et/ou
b) l'élément de couplage (4, 4 ; 4', 5', 14 ; 22) est transparent, et/ou
c) l'élément de couplage (4, 4 ; 4', 5', 14 ; 22) n'est pas magnétique, et/ou
d) l'élément de couplage (4, 4 ; 4', 5', 14 ; 22) couple l'élément aimanté (3 ; 20, 21 ; 6, 27 ; 32, 33) selon une distance prédéterminée avec le support d'échantillon (2 ; 23 ; 29 à 31), où la distance entre le support d'échantillon (2 ; 23 ; 29 à 31) et l'élément aimanté (3 ; 20, 21 ; 26, 27 ; 32, 33) est supérieure au support d'échantillon (2 ; 23 ; 29 à 31) et/ou à l'élément aimanté (3 ; 20, 21 ; 26, 27 ; 32, 33) et/ou
e) l'élément de couplage (14 ; 22) forme un ajustage sur un côté comportant l'élément aimanté (3 ; 20, 21 ; 26, 27 ; 32, 33) et sur le côté opposé comportant le support d'échantillon (2 ; 23 ; 29 à 31),
f) l'élément aimanté (3 ; 20, 21 ; 26, 27 ; 32, 33) est un revêtement étanche à l'eau (8) qui empêche une extraction d'ions de l'élément aimanté (3 ; 20, 21 ; 26, 27 ; 32, 33).

5. Dispositif de manipulation selon l'une des revendications précédentes, **caractérisé par** plusieurs éléments aimantés (19, 20 ; 26, 27 ; 32 à 34) qui sont polarisés différemment et s'attirent mutuellement, magnétiquement.

6. Dispositif de manipulation selon la revendication 5, **caractérisé en ce que** les deux éléments aimantés (19, 20) sont respectivement essentiellement en forme de U et sont côte à côte avec leurs faces inférieures polarisées différemment et s'attirent alternativement de sorte que les quatre branches des éléments aimantés (19, 20) forment deux réceptacles pour un support d'échantillon, respectivement.

7. Dispositif de manipulation selon l'une des revendications précédentes, **caractérisé par** au moins deux éléments aimantés (3 ; 20, 21 ; 26, 27 ; 32, 33) qui s'attirent magnétiquement et renferment au moins un support d'échantillon (2 ; 23 ; 29 à 31) entre deux.

8. Dispositif de manipulation selon la revendication 7, **caractérisé en ce que,** soit
a) un élément aimanté (27) contient un matériau magnétique permanent tandis que l'autre élément aimanté (26) contient un matériau pouvant être aimanté, soit
b) les deux éléments aimantés (26, 27) contiennent un matériau magnétique permanent.

9. Dispositif de manipulation selon l'une des revendications précédentes, **caractérisé en ce que** plusieurs supports d'échantillon (2 ; 23 ; 29 à 31) et/ou plusieurs éléments aimantés (32 à 34) forment conjointement un ensemble de poussée ou un ensemble de traction.

10. Dispositif de manipulation selon l'une des revendications précédentes, **caractérisé par** un canal dans lequel le support d'échantillon (2 ; 23 ; 29 à 31) est disposé avec l'élément aimanté (3 ; 20, 21 ; 26, 27 ; 32, 33), où le support d'échantillon (2 ; 23 ; 29 à 31) peut être déplacé dans le canal par un champ magnétique externe.

11. Dispositif de manipulation selon la revendication 10, **caractérisé en ce que**
a) le canal présente une largeur de plus de 10 µm et/ou de moins de 5 mm, et/ou
b) le canal présente une hauteur de plus de 10 µm et/ou de moins de 1 mm.

12. Dispositif de manipulation selon l'une des revendications 10 à 11, **caractérisé par** une unité aimantée (11) pour générer le champ magnétique externe pour déplacer l'élément aimanté (3 ; 20, 21 ; 26, 27 ; 32, 33), où l'unité aimantée (11) est disposée en dehors du canal.

13. Dispositif de manipulation selon la revendication 12, **caractérisé en ce que**
a) l'élément aimanté (3) présente au moins deux aimants permanents (24, 25),
b) l'unité magnétique (11) présente au moins deux aimants permanents (12, 13), et
c) les aimants permanents (24, 25) dans l'élément aimanté (3) d'une part et les aimants permanents (12, 13) dans l'unité aimantée (11) d'autre part sont disposés de façon à être spatialement complémentaires les uns des autres.

14. Dispositif de manipulation selon l'une des revendications précédentes, **caractérisé en ce que** le canal et/ou le support d'échantillon (2 ; 23 ; 29 à 31) et/ou l'élément aimanté (3 ; 20, 21 ; 26, 27 ; 32, 33) présentent des dimensions à l'échelle du micron.

15. Dispositif de manipulation selon l'une des revendications précédentes, **caractérisé en ce que** l'élément aimanté (3 ; 20, 21 ; 26, 27 ; 32, 33) présente l'une des formes suivantes ;
a) une forme de U,
b) une forme de V,
c) une forme de H,
d) une forme de X
e) une forme annulaire, en particulier, une forme circulaire,
f) une forme de double U.

16. Dispositif de manipulation selon l'une des revendications précédentes, **caractérisé en ce que**
a) l'élément aimanté (3 ; 20, 21 ; 26, 27 ; 32, 33) est constitué d'un matériau magnétique permanent ou d'un matériau pouvant être aimanté, et/ou
b) le matériau pouvant être aimanté de l'élément aimanté (3 ; 20, 21 ; 26, 27 ; 32, 33) est l'un des matériaux suivants : du fer, du nickel, un alliage comportant du fer et/ou du nickel comme composants de l'alliage.

17. Dispositif de manipulation selon l'une des revendications précédentes, **caractérisé en ce que**
a) le support d'échantillon (2 ; 23 ; 29 à 31) est essentiellement sous la forme d'une plaque, et/ou
b) le support d'échantillon (2 ; 23 ; 29 à 31) et/ou l'élément aimanté (3 ; 20, 21 ; 26, 27 ; 32, 33) présente sur sa face extérieure, en particulier sur sa face inférieure, un revêtement réduisant le frottement.

18. Procédé de manipulation d'un échantillon (1), en particulier d'un échantillon biologique (1) comportant les étapes suivantes :
a) dépôt de l'échantillon (1) sur un support d'échantillon (2 ; 23 ; 29 à 31),
b) couplage mécanique du support d'échantillon (2 ; 23 ; 29 à 31) avec un élément aimanté (3 ; 20, 21 ; 26, 27 ; 32, 33),
c) génération d'un champ magnétique externe pour déplacer l'élément aimanté (3 ; 20, 21 ; 26, 27 ; 32, 33) conjointement avec le support d'échantillon couplé (2 ; 23 ; 29 à 31) et l'échantillon qui se trouve sur celui-ci (1).

19. Procédé de manipulation selon la revendication 18, **caractérisé par** les étapes suivantes :
a) introduction du support d'échantillon (2 ; 23 ; 29 à 31) et de l'élément aimanté (3 ; 20, 21 ; 26, 27 ; 32, 33) dans un canal,
b) déplacement de l'élément aimanté (3 ; 20, 21 ; 26, 27 ; 32, 33) avec le support d'échantillon couplé (2 ; 23 ; 29 à 31) et l'échantillon (1) qui se trouve sur celui-ci dans le canal, et/ou
c) couplage de plusieurs supports d'échantillon (2 ; 23 ; 29 à 31) et/ou de plusieurs éléments aimantés en un ensemble de poussée ou un ensemble de traction, et/ou
d) inclusion d'au moins un support d'échantillon (2 ; 23 ; 29 à 31) entre deux éléments aimantés, où les deux éléments aimantés s'attirent mutuellement, magnétiquement et/ou
e) analyse de l'échantillon (1) qui se trouve sur le support d'échantillon (2 ; 23 ; 29 à 31), et/ou
f) génération d'un courant de fluide dans le canal et déplacement de l'élément aimanté (3 ; 20, 21 ; 26, 27 ; 32, 33) avec le support d'échantillon (2 ; 23 ; 29 à 31) et l'échantillon (1) qui se trouve sur le support d'échantillon (2 ; 23 ; 29 à 31) dans le canal, contre le courant de fluide.

20. Procédé de manipulation selon l'une des revendications 18 à 19, **caractérisé en ce que** l'élément aimanté (3 ; 20, 21 ; 26, 27 ; 32, 33) avec le support d'échantillon (2 ; 23 ; 29 à 31) et l'échantillon (1) qui se trouve sur le support d'échantillon (2 ; 23 ; 29 à 31) est déplacé à une vitesse qui est supérieure à 1 µm/s et/ou inférieure à 5 cm/s.
